# EUROPEAN PATENT SPECIFICATION

(11) **EP 1 300 274 B1**
(45) Date of publication and mention of the grant of the patent: **01.03.2006**
(21) Application number: 02022183.4
(22) Date of filing: 04.10.2002
(51) Int. Cl.: B60K 15/035, F02M 25/08, B01D 53/04

(54) **A fuel tank**
Kraftstofftank
Réservoir de carburant

(30) Priority: 05.10.2001 IT TO20010945
(43) Date of publication of application: 09.04.2003
(73) Proprietor: Dayco Fuel Management S.p.A., 10123 Torino (IT)
(72) Inventor: Fiorio, Luigino, 10010 Scarmagno (IT)
(74) Representative: Franzolin, Luigi

(56) References cited:
- WO-A-01/42642
- WO-A-99/42316
- US-A- 3 831 353
- US-A- 4 852 761
- US-A- 4 919 103
- US-A1- 2001 013 516
- US-B1- 6 250 081

## Description

The present invention relates to a fuel tank.

The present invention advantageously applies to the sector of fuel tanks for motor vehicles, to which the following description will refer explicitly without thereby implying any restriction.

It is known in the automobile sector that the fuel present in tanks, given, its relatively high vapour pressure, tends to vaporise and be released into the surrounding environment and, consequently, pollutes the air. For this reason, the antipollution regulations in the automobile sector in the majority of countries require every vehicle to be provided with a temporary accumulator, normally designated "canister", for the fuel vapours which are formed inside the tank, particularly when the vehicle is parked.

Currently the accumulator is provided in a compartment of the respective motor vehicle separate from the tank and is connected to said tank via a tubular duct adapted to allow the fuel vapour to pass from the tank to the accumulator. This solution takes the form of a relatively long assembly owing to the necessity of connecting the tank to the accumulator inside a compartment which is usually of relatively small dimensions.

US-B-6250081 discloses a fuel tank having the features of the preamble of claim 1 and comprising, in particular, an enclosure, first and second chambers disposed inside said enclosure, said first chamber being adapted to receive the fuel; an internal wall disposed inside said enclosure so as to separate said two chambers from one another; accumulator means for the temporary accumulation of fuel vapour, which are disposed in said second chamber; first connecting means between said two chambers for the passage of fuel vapour from said first chamber to said second chamber; second connecting means between said second chamber and the outside environment, and suction means connected to said second chamber for creating an underpressure inside said second chamber.

According to a preferred embodiment of the above-defined tank, said internal wall is made of polyethylene.

In this context it is to be noted that polyethylene is a material which, if not surface-treated, for example by fluorination, exhibits a high degree of permeability with respect to hydrocarbons. However, fluorination cannot be applied to said internal wall since, during this treatment, parasitic reactions can occur with said accumulator means which are normally composed of activated carbon.

Therefore, there is the problem of preventing the hydrocarbon molecules from passing through the internal wall in the vicinity of the second connecting means and from leaking to the exterior without passing through the accumulator means. The object of the present invention is to provide a fuel tank which does not have the above-described disadvantage and which is simple and economical to produce.

According to the present invention, dividing means are provided inside said second chamber so as to divide said second chamber into an inner chamber and an outer chamber surrounding said inner chamber and communicating with said inner chamber; said first connecting means and said suction means communicating with said outer chamber and second connecting means communicating with said inner chamber.

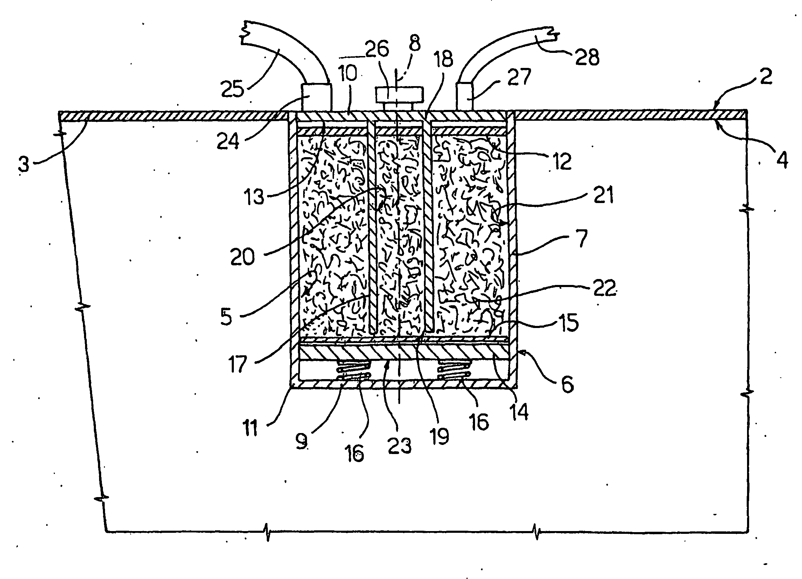

The invention will now be described with reference to the accompanying drawing which illustrates a non-restrictive embodiment, partly in axial section.

In the attached drawing the reference numeral 1 generally denotes a fuel tank outwardly bounded by an enclosure 2 comprising an outer wall 3 of polyethylene. The tank 1 comprises a chamber 4 adapted to receive the fuel and a chamber 5 which is adapted for the temporary accumulation of fuel vapours and which is defined inside a polyethylene enclosure 6 of substantially cylindrical shape disposed inside the enclosure 2.

The enclosure 6 comprises a substantially cylindrical side wall 7 which has a longitudinal axis 8 and is closed at opposite ends by two end walls 9 and 10 orthogonal to the side wall, and the end wall 10 of which is defined by a portion of the outer wall 3, whereas the side wall 7 and end wall 9 are integral with one another and define an internal wall 11 of the tank 1.

Inside the enclosure 6 the chamber 5 is defined by the side wall 7; by a fixed circular bottom wall 12 which is gas-permeable and preferably perforated, which is arranged opposite and adjacent the end wall 10 and which is coupled, along its outer periphery, with the inner surface of the side wall 7 so as to define, with said side wall 7 and with the end wall 10, a cylindrical hollow space 13; and by a movable circular bottom wall 14 which is arranged opposite and adjacent the end wall 9, which is covered on the side facing towards the end wall 10 with a covering layer 15, which has it outer periphery coupled in a sliding manner with the inner surface of the side wall 7 and urged towards the end wall 10 by a plurality of springs 16 compressed between the end wall 10 and said bottom wall 14.

Inside the chamber 5 there is disposed a cylindrical tubular member 17 of polyethylene extending coaxially to the axis 8 through the bottom wall 12 and having an end 18 connected fluidtightly to an inner surface of the end wall 10, and another end, which is disposed opposite and adjacent the bottom wall 14, having an inlet opening 19 of an inner chamber 20 bounded by said tubular member 17. Inside the chamber 5 the tubular member 17 defines, besides the inner chamber 20, an annular outer chamber 21 which is formed between said tubular member 17 and the side wall 7 and communicates with the inner chamber 20 through the opening 19.

The chamber 5 accommodates a granular adsorbent material 22, for example activated carbon, which is compressed at a given pressure by a compressing means 23 defined by the bottom wall 14 and by the springs 16.

The tank 1 further comprises a connector 24, which is fitted so as to pass through the end wall 10 outside the tubular member 17 so as to discharge directly inside the hollow space 13, which is connected to the chamber 4 via a duct 25 and which forms the inlet for fuel vapour into the chamber 5. The tank 1 also comprises a further connector 26 which is fitted so as to pass through the end wall 10 inside the tubular member 17 so as to discharge directly inside the hollow space 13 in alignment with the inner chamber 20 and it connects said inner chamber 20 with the outside environment. Finally, the tank 1 comprises a connector 27 which is fitted so as to pass through the end wall 10 outside the tubular member 17 so as to discharge directly inside the hollow space 13 and connect the outer chamber 21 to an intake duct 28 normally connected to an induction manifold (not shown) of an internal-combustion engine (not shown)..

In operation, a first adsorption phase and a second desorption or scavenging phase are alternated. During the adsorption phase, the vapour originating from the chamber 4 enters the chamber 5 in alignment with the outer chamber 21 through the duct 25 and the connector 24, are distributed in the hollow space 13 and by diffusion pass through the outer chamber 21 towards the bottom wall 14, then, after having passed through the opening 19 and the inner chamber 20 towards the end wall 10.

Consequently, before reaching the connector 26, the fuel vapour is distributed throughout the chamber 5 and saturates in a substantially complete manner the adsorption sites of the adsorbent material 22.

In this respect it is important to note that even the fuel which succeeds in penetrating into the chamber 5 directly through the internal wall 11 has to travel a relatively long distance, along which the adsorbent material 22 is disposed, before being dispersed in the environment. In fact, in the worse case, the fuel has to pass through the inner chamber 20 before reaching the connector 26.

During the second scavenging or desorption phase the intake duct is connected to the induction manifold (not shown) so that the air originating,from the outside environment is aspirated through the connector 26 into the inner chamber 20 and, in passing through the inner chamber 20, the opening 19, the outer chamber 21 and the hollow space 13, regenerates the adsorbent material 22. In this way the fuel adsorbed during the first phase is aspirated from the chamber 5.

In a variant of the above-described tank 1 the circular wall 12 is movable.

According to one possible method of producing the tank 1, the enclosure 2 and the enclosure 6 are formed separately and are joined together by welding the wall 11 to the wall 3.

## Claims

1. A fuel tank comprising an enclosure (2) , first and second chambers (4,5) disposed inside said enclosure (2), said first chamber (4) being adapted to receive the fuel; an internal wall (11) disposed inside said enclosure (2) so as to separate said two chambers (4,5) from one another; accumulator means (22) for the temporary accumulation of fuel vapour, which are disposed in said second chamber (5); first connecting means (24,25) between said two chambers (4,5) for the passage of fuel vapour from said first chamber (4) to said second chamber (5) ; second connecting means (26) between said second chamber (5) and the outside environment, and suction means (28) connected to said second chamber (5) for creating an underpressure inside said second chamber (5), **characterised in that** dividing means (17) are provided inside said second chamber (5) for dividing said second chamber (5) into an inner chamber (20) and an outer chamber (21) surrounding said inner chamber (20) and communicating with said inner chamber (20);said inner and outer chambers (20,21) both containing said accumulator means (22); said first connecting means (24,25) and said suction means (28) communicating with said outer chamber (21) , and said second connecting means (26) communicating with said inner chamber (20).

2. A tank according to claim 1, wherein said internal wall (11) and said enclosure (2) are formed from the same material,

3. A tank according to claim 2 wherein said material is polyethylene.

4. A tank according to any one of the preceding claims wherein said accumulator means (22) comprise activated carbon.

5. A tank according to any one of the preceding claims and comprising compressing means (23) for imparting to said accumulator means (22) a given pressure inside said second chamber (5).

6. A tank according to any one of the preceding claims, wherein said enclosure (2) comprises an outer wall (3), said internal wall (11) being cup-shaped and being connected to said external wall (3) so as to define, with a portion of said external wall (3), an inner enclosure (6) accommodating said accumulator means (22).

7. A tank according to claim 6, wherein said inner enclosure (6) is of substantially cylindrical shape and comprises a cylindrical side wall (7) and first and second end walls (10, 9) ; said first end wall (10) being defined by said portion of said external wall (3) and said first and second connecting means (24,25,26) and said suction means (28) communicating with said second chamber (5) via said first end wall (10).

8. A tank according to claims 5 and 7, wherein said second end wall (9) comprises an axially movable bottom wall (14); said compressing means (23) comprising said bottom wall (14) and elastic thrust means (16) for displacing said bottom wall (14) towards said first end wall (10).

9. A tank according to claim 7 wherein said dividing means (17) comprise a tubular member (17) coaxial to said side wall (7) and having a first end (18) closed by said portion of external wall (3) and a second end opposite and adjacent to said second end wall (9); said inner chamber (20) being inside said tubular member (17); said outer chamber (21) being of annular shape, being formed between said side wall (7) and said tubular member (17) and communicating with said inner chamber (20) through said second end.

## Patentansprüche

1. Kraftstofftank mit einem Gehäuse (2), ersten und zweiten Kammern (4,5) in dem Gehäuse (2), wobei die erste Kammer (4) zum Aufnehmen des Kraftstoffs vorgesehen ist; einer Innenwand (11) in dem Gehäuse (2) zum Trennen der beiden Kammern (4,5) voneinander; für die temporäre Akkumulation von Kraftstoffdampf vorgesehene Akkumulatoreinrichtungen (22) in der zweiten Kammer (5); einer ersten Verbindungseinrichtung (24,25) zwischen den beiden Kammern (4,5) zum Leiten des Kraftstoffdampfs von der ersten Kammer (4) zu der zweiten Kammer (5); einer zweiten Verbindungseinrichtung (26) zwischen der zweiten Kammer (5) und der Umgebung; und einer mit der zweiten Kammer (5) verbundenen Ansaugeinrichtung (28) zum Erzeugen eines Unterdrucks in der zweiten Kammer (5),
**dadurch gekennzeichnet, dass**
Unterteilungseinrichtungen (17) in der zweiten Kammer (5) vorgesehen sind zum Unterteilen der zweiten Kammer (5) in eine Innenkammer (20) und eine Außenkammer (21), die die Innenkammer (20) umgibt und mit der Innenkammer (20) in Verbindung steht, wobei sowohl die Innen- als auch Außenkammer (20,21) die Akkumulatoreinrichtungen (22) aufweisen, die erste Verbindungseinrichtung (24,25) und die Ansaugeinrichtung (28) mit der Außenkammer (21) in Verbindung stehen, und die zweite Verbindungseinrichtung (26) mit der Innenkammer (20) in Verbindung steht.

2. Tank nach Anspruch 1, bei dem die Innenwand (11) und das Gehäuse (2) aus dem gleichen Material gefertigt sind.

3. Tank nach Anspruch 2, bei dem das Material Polyethylen ist.

4. Tank nach einem der vorhergehenden Ansprüche, bei dem die Akkumulatoreinrichtungen (22) Aktivkohle aufweisen.

5. Tank nach einem der vorhergehenden Ansprüche, mit einer Kompressoreinrichtung (23) zum Setzen der Akkumulatoreinrichtungen (22) auf einen vorgegebenen Druck in der zweiten Kammer (5).

6. Tank nach einem der vorhergehenden Ansprüche, bei dem das Gehäuse (2) eine Außenwand (3) aufweist, wobei die Innenwand (11) becherförmig ausgebildet ist und derart mit der Außenwand (3) verbunden ist, dass sie mit einem Teil der Außenwand (3) ein Innengehäuse (6) zum Aufnehmen der Akkumulatoreinrichtungen (22) bildet.

7. Tank nach Anspruch 6, bei dem das Innengehäuse (6) im wesentlichen zylindrisch ausgebildet ist und eine zylindrischen Seitenwand (7) und erste und zweite Stirnwände (10,9) aufweist; wobei die erste Stirnwand (10) von dem Teil der Außenwand (3) gebildet ist und die ersten und zweiten Verbindungseinrichtungen (24,25,26) und die Ansaugeinrichtung (28) über die erste Stirnwand (10) mit der zweiten Kammer (5) in Verbindung stehen.

8. Tank nach Anspruch 5 und 7, bei dem die zweite Stirnwand (9) eine axial bewegbare Bodenwand (14) aufweist; wobei die Kompressoreinrichtung (23) die Bodenwand (14) und eine elastische Schubeinrichtung (16) zum Verschieben der Bodenwand (14) in Richtung der ersten Endwand (10) aufweist.

9. Tank nach Anspruch 7, bei dem die Unterteilungseinrichtung (17) ein rohrförmiges Element (17) aufweist, das koaxial zu der Seitenwand (7) angeordnet ist und ein von dem Teil der Außenwand (3) verschlossenes erstes Ende (18) und ein der zweiten Stirnwand (9) gegenüberliegend und benachbart angeordnetes zweites Ende aufweist; wobei die Innenkammer (20) in dem rohrförmigen Element (17) angeordnet ist; die Außenkammer (21) ringförmig ausgebildet ist und zwischen der Seitenwand (7) und dem rohrförmigen Element (17) angeordnet ist und über das zweite Ende mit der Innenkammer (20) in Verbindung steht.

## Revendications

1. Un réservoir de carburant comprenant une enceinte (2), une première chambre et une deuxième chambre (4, 5) disposées à l'intérieur de ladite enceinte (2), ladite première chambre (4) étant adaptée pour recevoir le carburant ; une paroi intérieure (11) disposée à l'intérieur de ladite enceinte (2) de manière à séparer lesdites deux chambres (4, 5) l'une de l'autre ; un dispositif d'accumulation (22) pour l'accumulation temporaire de vapeurs de carburant, qui est disposé dans la deuxième chambre (5) ; un premier dispositif de connexion (24, 25) entre lesdites deux chambres (4, 5) pour le passage des vapeurs de carburant depuis ladite première chambre (4) jusqu'à ladite deuxième chambre (5) ; un deuxième dispositif de connexion (26) entre la deuxième chambre (5) et l'environnement extérieur, et un dispositif de succion (28) connecté à ladite deuxième chambre (5) pour créer une sous - pression à l'intérieur de ladite deuxième chambre (5),
**caractérisé en ce que**
un dispositif de division (17) est fourni à l'intérieur de ladite deuxième chambre (5) pour diviser ladite deuxième chambre (5) en une chambre interne (20) et une chambre externe (21) entourant ladite chambre interne (20) et communiquant avec ladite chambre interne (20) ; lesdites chambres interne et externe (20, 21) contenant toutes deux ledit dispositif d'accumulation (22) ; ledit premier dispositif de connexion (24, 25) et ledit dispositif de succion (28) communiquant avec ladite chambre externe (21), et ledit deuxième dispositif de connexion (26) communiquant avec ladite chambre interne (20).

2. Un réservoir selon la revendication 1, dans lequel ladite paroi intérieure (11) et ladite enceinte (2) sont formées avec le même matériau.

3. Un réservoir selon la revendication 2, dans lequel ledit matériau est du polyéthylène.

4. Un réservoir selon l'une quelconque des revendications précédentes, dans lequel ledit dispositif d'accumulation (22) comprend du charbon actif.

5. Un réservoir selon l'une quelconque des revendications précédentes, et comprenant un dispositif de compression (23) pour exercer une pression donnée sur ledit dispositif d'accumulation (22) à l'intérieur de ladite deuxième chambre (5).

6. Un réservoir selon l'une quelconque des revendications précédentes, dans lequel ladite enceinte (2) comprend une paroi extérieure (3), ladite paroi intérieure (11) ayant la forme d'une coupe et étant connectée avec ladite paroi extérieure (3) de manière à définir, avec une portion de ladite paroi extérieure (3), une enceinte interne (6) recevant ledit dispositif d'accumulation (22).

7. Un réservoir selon la revendication 6, dans lequel ladite enceinte (6) a une forme substantiellement cylindrique et comprend une paroi latérale cylindrique (7), une première paroi d'extrémité et une deuxième paroi d'extrémité (10, 9) ; ladite première paroi d'extrémité (10) étant définie par ladite portion de ladite paroi extérieure (3) et lesdits premier et deuxième dispositifs de connexion (24, 25, 26) et ledit dispositif de succion (28) communiquant avec ladite deuxième chambre (5) au moyen de ladite première paroi d'extrémité (10).

8. Un réservoir selon les revendications 5 et 7, dans lequel ladite deuxième paroi d'extrémité (9) comprend une paroi de fond (14) à déplacement axial ; ledit dispositif de compression (23) comprend ladite paroi de fond (14) et un dispositif de poussée élastique (16) pour déplacer ladite paroi de fond (14) vers ladite première paroi d'extrémité (10).

9. Un réservoir selon la revendication 7, dans lequel ledit dispositif de division (17) comprend un membre tubulaire (17) coaxial avec ladite paroi latérale cylindrique (7) et possédant une première extrémité (18) fermée par ladite portion de paroi extérieure (3) et une deuxième extrémité à l'opposée de, et adjacente à, ladite deuxième paroi d'extrémité (9) ; ladite chambre interne (20) étant à l'intérieur dudit membre tubulaire (17) ; ladite chambre externe (21) ayant une forme annulaire, étant formée entre ladite paroi latérale (7) et ledit membre tubulaire (17) et communiquant avec ladite chambre interne (20) à travers ladite deuxième extrémité.
